# EUROPÄISCHE PATENTSCHRIFT

(11) **EP 2 864 154 B1**
(45) Veröffentlichungstag und Bekanntmachung des Hinweises auf die Patenterteilung: **20.04.2016**
(21) Anmeldenummer: 13736789.2
(22) Anmeldetag: 21.06.2013
(51) Int. Cl.: B60N 2/20, B60N 2/235

(54) **BESCHLAG FÜR EINEN FAHRZEUGSITZ SOWIE FAHRZEUGSITZ**
FITTING FOR A VEHICLE SEAT, AND VEHICLE SEAT
FERRURE POUR SIÈGE DE VÉHICULE, ET SIÈGE DE VÉHICULE CORRESPONDANT

(30) Priorität: 26.06.2012 DE 102012012852; 14.02.2013 DE 102013002819
(43) Veröffentlichungstag der Anmeldung: 29.04.2015
(73) Patentinhaber: Johnson Controls Components GmbH & Co. KG, 67657 Kaiserslautern (DE)
(72) Erfinder: THIEL, Peter, 42899 Remscheid (DE)
(74) Vertreter: Liedhegener, Ralf
(86) Internationale Anmeldenummer: PCT/EP2013/062958
(87) Internationale Veröffentlichungsnummer: WO 2014/001207

(56) Entgegenhaltungen:
- DE-A1-102006 003 243

## Beschreibung

Die Erfindung betrifft einen Beschlag für einen Fahrzeugsitz mit einem ersten Beschlagteil und einem zweiten Beschlagteil, welche relativ zueinander verdrehbar sind und miteinander in Getriebeverbindung stehen und mit einem dritten Beschlagteil, welches relativ zum ersten Beschlagteil schwenkbar an dem ersten Beschlagteil gelagert ist, wobei das dritte Beschlagteil mittels einer in einem ersten Gelenkpunkt an dem dritten Beschlagteil gelagerten Klinke mit dem ersten Beschlagteil verriegelbar ist. Die Erfindung betrifft des Weiteren einen Fahrzeugsitz mit den Merkmalen des Anspruchs 15.

### Stand der Technik

Ein Beschlag dieser Art ist aus der US 7,571,962 B2 bekannt. Das erste Beschlagteil und das zweite Beschlagteil stehen miteinander in Getriebeverbindung, um die Neigung der Lehne einzustellen. Auf einem am ersten Beschlagteil befestigten Lagerring ist das dritte Beschlagteil schwenkbar gelagert. Ferner sitzt ein separat ausgebildetes Rastelement auf dem Lagerring und ist an diesem befestigt, so dass es fest mit dem ersten Beschlagteil verbunden ist. Eine am dritten Beschlagteil schwenkbar gelagerte, gezahnte Klinke verriegelt mit dem Rastelement, welches hierzu in einem radial abstehenden Bereich ebenfalls gezahnt ist. Wird die Klinke geöffnet, ist die Lehne freischwenkbar. Das Freischwenken dient insbesondere dem erleichterten Zugang von Passagieren zu einer hinteren Sitzreihe.

Ein ähnlicher Beschlag ist aus der DE 10 2008 017 019 A1 bekannt. Das erste Beschlagteil und das zweite Beschlagteil stehen miteinander in Getriebeverbindung, um die Neigung der Lehne einzustellen. Ein Umklammerungsring übergreift das zweite Beschlagteil und ist fest mit dem ersten Beschlagteil verbunden, wobei sie gemeinsam eine Nase ausbilden, welche einen von der ansonsten kreisrunden Grundform radial abstehenden Bereich darstellt. Ein drittes Beschlagteil ist relativ zum ersten Beschlagteil schwenkbar gelagert. Ein am dritten Beschlagteil vorgesehener bolzenförmiger Anschlag und ein am dritten Beschlagteil schwenkbar gelagerter, vorgespannter Riegel nehmen die Nase zwischen sich auf und verriegeln so das dritte Beschlagteil mit dem ersten Beschlagteil. Wird der Riegel geöffnet, ist die Lehne freischwenkbar.

Die DE102006003243 zeigt einen Beschlag entsprechend dem Oberbegriff des Anspruchs 1.

### Aufgabe

Der Erfindung liegt die Aufgabe zu Grunde, einen Beschlag der eingangs genannten Art zu verbessern, insbesondere eine gewichts- und bauraumoptimierte Verriegelung für das Freischwenken der Lehne zur Verfügung zu stellen und einen Fahrzeugsitz mit einem solchen Beschlag zur Verfügung zu stellen.

### Lösung

Diese Aufgabe wird erfindungsgemäß durch einen Beschlag mit den im Anspruch 1 genannten Merkmalen und einen Fahrzeugsitz nach Anspruch 15 gelöst. Vorteilhafte Ausgestaltungen, welche einzeln oder in Kombination miteinander eingesetzt werden können, sind Gegenstand der Unteransprüche.

Dadurch, dass ein in einem zweiten Gelenkpunkt an dem dritten Beschlagteil gelagerter Sperrnocken, eine in einem dritten Gelenkpunkt mit dem Sperrnocken und in einem vierten Gelenkpunkt mit der Klinke gelenkig verbundene Koppel und die Klinke eine Viergelenkkette definieren, kann eine Verriegelung der Klinke im Bereich einer Totpunktlageerfolgen, in der öffnend auf die Klinke wirkende Kräfte, insbesondere Crashkräfte besonders einfach, aber wirkungsvoll abgestützt werden können. Unter dem Begriff Totpunktlage ist dabei eine Strecklage der Koppel und des Sperrnockens zu verstehen, bei der der zweite Gelenkpunkt, der dritte Gelenkpunkt und der vierte Gelenkpunkt auf einer gedachten, geraden Linie angeordnet sind. Kräfte entlang dieser Linie lassen die Koppel und den Sperrnocken nicht ausknicken.

Unter den Begriff Viergelenkkette sind vier Getriebeglieder, die über Gelenkpunkte miteinander verbunden sind, zu verstehen. Die Gelenkpunkte können durch Drehgelenke, Schubgelenke oder durch ein Drehschubgelenk, also eine Kombination aus einem Drehgelenk und einem Schubgelenk, gebildet sein. Ein Drehschubgelenk ist als einzelner Gelenkpunkt anzusehen, obwohl das Drehschubgelenk Bewegungen ermöglicht, die von einer reinen Drehbewegung abweichend sind. Die Viergelenkkette eines erfindungsgemäßen Beschlages kann somit einen Getriebefreiheitsgrad von eins oder größer eins haben.

Bevorzugt ist einer der Gelenkpunkte der Viergelenkkette als Drehschubgelenk ausgebildet und die übrigen Gelenkpunkte als reine Drehgelenke. Dadurch lässt sich eine Verriegelung der Klinke über die Totpunktlage hinaus erreichen. Besonders wirkungsvoll ist es, wenn der zweite Gelenkpunkt als Drehschubgelenk ausgebildet ist und die übrigen Gelenkpunkte als Drehgelenke ausgebildet sind.

Ein zwangsläufig aufgrund des Drehschubgelenkes vorhandenes Spiel in der Viergelenkkette hat keine negativen Auswirkungen auf die Spielfreiheit der Verriegelung im Normalbetrieb des Sitzes, wenn eine Feder die Viergelenkkette, insbesondere den Sperrnocken, in Richtung der verriegelten Position der Klinke vorspannt und den Sperrnocken in Anlage an die Klinke schwenkt. Ein als Spannfläche außerhalb der Selbsthemmung ausgelegter Verriegelungsnocken der Klinke wird dadurch gegen die Verriegelungsfläche des ersten Beschlagteils gespannt, ohne dass das Drehschubgelenk durch eine maximale Auslenkung in der Translationsrichtung spielfrei gestellt werden muss.

Die Totpunktlage lässt sich besonders einfach erzeugen, indem im verriegelten Zustand der Klinke der dritte Gelenkpunkt auf einer imaginären Verbindungslinie zwischen dem zweiten Gelenkpunkt und dem vierten Gelenkpunkt liegt oder der dritte Gelenkpunkt zwischen der Verbindungslinie und der Klinke liegt. Während des Entriegelungsvorgangs der Klinke wird der dritte Gelenkpunkt mittels der Viergelenkkette auf die von der Klinke abgewandte Seite der Verbindunglinie bewegt, so dass die Totpunktlage aufgehoben wird.

Der Beschlag wird vorzugsweise entriegelt, indem der Sperrnocken zum Entriegeln der Klinke entgegen der Kraft der Feder geschwenkt wird und dabei die Viergelenkkette die Klinke in Richtung auf deren entriegelte Position bewegt. Dazu umfasst der Sperrnocken einen Achsstummel, der unter Bildung des zweiten Gelenkpunkts in einer Öffnung des dritten Beschlagteils drehbar gelagert ist. Der Achsstummel weist bevorzugt eine profilierte Schnittstelle, insbesondere eine Polygonform, zur wenigstens mittelbaren Verbindung mit einem Handhebel an der Lehne des Fahrzeugsitzes auf.

### Figuren und Ausführungsformen der Erfindung

Im Folgenden ist die Erfindung anhand eines in den Zeichnungen dargestellten vorteilhaften Ausführungsbeispiels näher erläutert. Die Erfindung ist jedoch nicht auf dieses Ausführungsbeispiel beschränkt. Es zeigen:

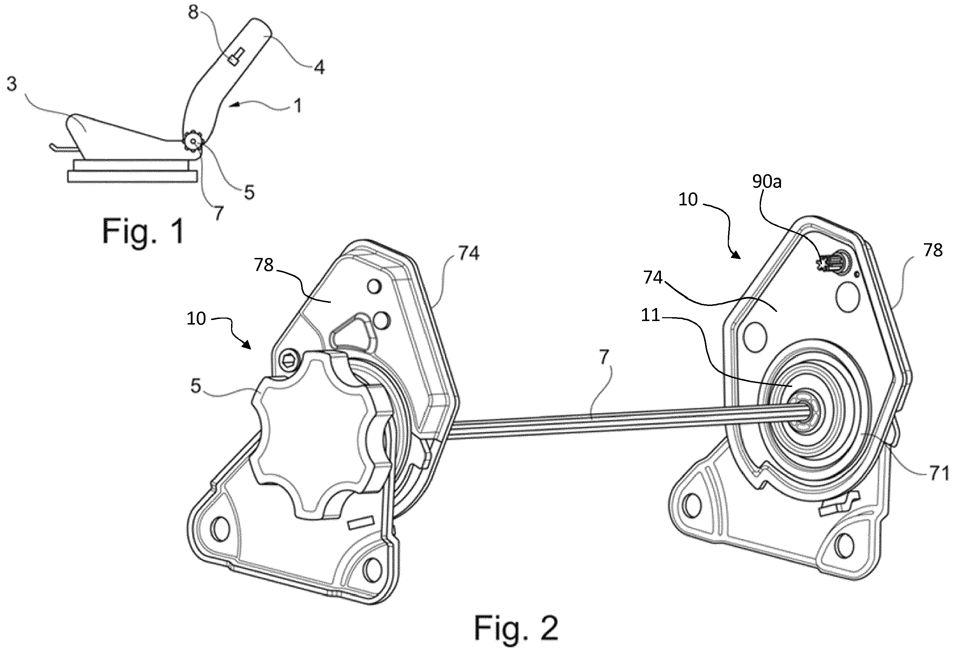

- Fig. 1:: eine schematische Darstellung eines Fahrzeugsitzes,
- Fig. 2:: eine perspektivische Darstellung eines Teils des Fahrzeugsitzes,

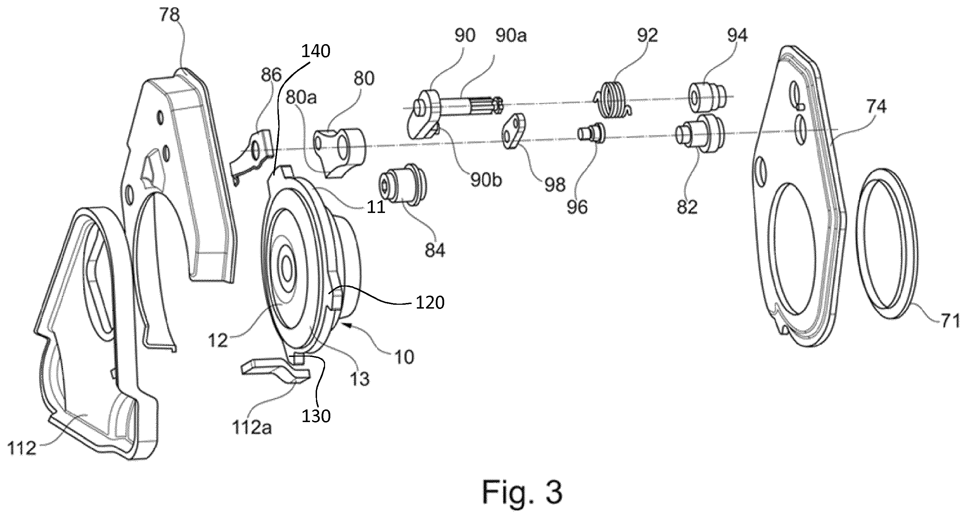

- Fig. 3:: eine Explosionsdarstellung des Beschlages inklusive Adapter,
- Fig. 4:: eine Explosionsdarstellung der scheibenförmigen Einheit des Beschlags mit vereinfacht dargestelltem ersten Beschlagteil,
- Fig. 5:: eine Draufsicht auf den Beschlag,
- Fig. 6:: einen Schnitt durch den Beschlag entlang der Linie VI - VI in Fig. 5,

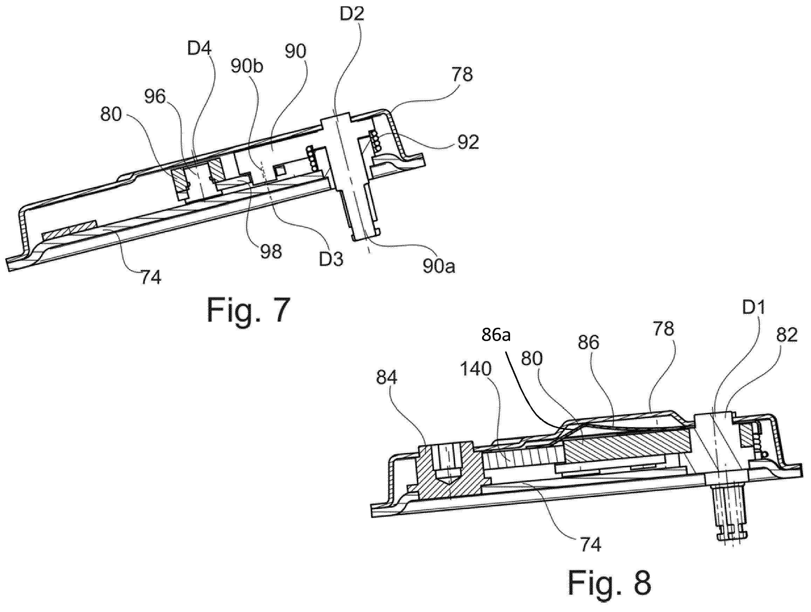

- Fig. 7:: einen Schnitt durch den Beschlag entlang der Linie VII - VII in Fig. 5,
- Fig. 8:: einen Schnitt durch den Beschlag entlang der Linie VIII - VIII in Fig. 5,
- Fig. 9:: eine Draufsicht auf den Beschlag im verriegelten Zustand der Freischwenkvorrichtung ohne Deckel und ohne Rückhaltefeder,
- Fig. 10:: eine Fig. 9 entsprechende Ansicht während des Entriegelns der Freischwenkvorrichtung,
- Fig. 11:: eine Fig. 9 entsprechende Ansicht der vollständig entriegelten Freischwenkvorrichtung und
- Fig. 12:: eine Fig. 9 entsprechende Ansicht der entriegelten Freischwenkvorrichtung während des Freischwenkens der Lehne.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die nachfolgend verwendeten Richtungsangaben eines Zylinderkoordinatensystems.

Der Beschlag 10 weist ein erstes Beschlagteil 11 und ein zweites Beschlagteil 12 auf, welche relativ zueinander drehbar sind. Die beiden Beschlagteile 11 und 12 lassen sich jeweils näherungsweise in eine kreisrunde Scheibenform einbeschreiben. Einzelne, nachfolgend noch beschriebene Funktionsgeometrien stehen in radialer Richtung über die kreisrunde Grundgeometrie des ersten Beschlagteils 11 über. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 A beschrieben. Der vorzugsweise metallische Umklammerungsring 13 ist fest mit einem der beiden Beschlagteile 11 und 12 verbunden, vorliegend mit dem ersten Beschlagteil 11 in einem äußeren Randabschnitt, beispielsweise verschweißt oder (in Umfangsrichtung wenigstens teilweise) umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern, d.h. der Umklammerungsring 13 und das mit ihm fest verbundene Beschlagteil 11 oder 12 umklammern das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Nach der Befestigung des Beschlags 10 an den Fahrzeugsitz 1 steht das erste Beschlagteil 11 in (verriegelter) Verbindung mit der Lehne 4, solange eine nachfolgend beschriebene Freischwenkverriegelung nicht entriegelt ist. Das zweite Beschlagteil 12 ist fest über einen Adapter 112 mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 stünde in Verbindung mit der Lehne 4.

Der Beschlag 10 liegt im Kraftfluss zwischen Lehne 4 und Sitzteil 3, weshalb die beiden Beschlagteile 11 und 12 aus Metall bestehen, vorzugsweise aus Stahl.

Der Beschlag 10 umfasst einen Getriebebeschlag, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Durch diese Abwälzbewegung werden das erste Beschlagteil 11 und das zweite Beschlagteil 12 relativ zueinander verdreht und dadurch die Neigung der Lehne 4 relativ zum Sitzteil 3 verändert. Der Insasse des Fahrzeugsitzes 1 kann somit die Lehnenneigung an seine individuellen Komfortbedürfnisse anpassen.

Der Komforteinstellbereich der Lehne ist begrenzt, indem ein fest mit dem sitzteilfesten Adapter 112 verbundener Anschlag 112a zwischen einen ersten Nocken 120 und einen zweiten Nocken 130 des ersten Beschlagteils 11 greift. Der erste Nocken 120 und der zweite Nocken stehen als Funktionsgeometrien in radialer Richtung über die kreisrunde Grundgeometrie des ersten Beschlagteils 11 über. Am ersten Nocken 120 ist eine dem Anschlag 112a zugewandte erste Anschlagfläche 120a und am zweiten Nocken 130 eine dem Anschlag 112a zugewandte zweite Anschlagfläche 130a ausgebildet, von denen jeweils eine in einem der beiden Endpunkten des Komfortverstellbereiches der Lehne an dem Anschlag 112a anliegt und ein weiteres Verstellen des Beschlags 10 verhindert.

Der Abstand zwischen der ersten Anschlagfläche 120a und der zweiten Anschlagfläche 130a ist größer als die Abmessung des zwischen den Anschlagflächen 120a, 130a liegenden Anschlags 112a, wodurch der Komforteinstellbereich der Lehne definiert ist.

Die Ausbildung von Zahnrad 16 und Zahnkranz 17 erfolgt vorzugsweise mittels eines einzigen Präge-Stanz-Vorgangs, der zugleich die Beschlagteile 11, 12 aus ihrem Ausgangsmaterial ausstanzt. Alternativ können die Beschlagteile 11, 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Das zweite Beschlagteil 12 weist konzentrisch zum Zahnrad 16 einen Kragen 19 auf. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das erste Beschlagteil 11 lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsring 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die Sperrfeder 51 sperrt jeweils die Keilsegmente 27 im nichtangetriebenen Zustand (indem die Sperrfeder 51 mittels Anlage an die Endfinger 35a die Feder 35 sperrt) und wird durch den angetriebenen Mitnehmer 21 gelöst.

Jeder Beschlag 10 umfasst außer der besagten scheibenförmigen, als Getriebebeschlag ausgebildeten Einheit mit den darin enthaltenen Bauteilen auch noch eine Freischwenkvorrichtung. Am ersten Beschlagteil 11 ist auf dessen vom zweiten Beschlagteil 12 abgewandten Seite, mittels eines am ersten Beschlagteil 11 befestigten Lagerrings 71, ein drittes Beschlagteil 74 gelagert. Das im Wesentlichen plattenförmige dritte Beschlagteil 74 ist mit der Lehnenstruktur der Lehne 4 verbunden und für das zentrisch erfolgende Freischwenken relativ zum ersten Beschlagteil 11 um eine (durch den Lagerring 71 definierte) zentrale Achse A schwenkbar, die parallel zur Übertragungsstange 7 liegt. Sofern nicht abweichend beschrieben verlaufen sämtliche nachfolgend beschriebenen Drehungen um parallel zur Achse A ausgerichtete Drehachsen.

Beim Gebrauch des Fahrzeugsitzes 1 ist das dritte Beschlagteil 74 mit dem ersten Beschlagteil 11 verriegelt. Dazu weist das Beschlagteil 11 als weitere Funktionsgeometrie einen in radialer Richtung über die kreisrunde Grundgeometrie des ersten Beschlagteils 11 überstehenden Vorsprung 140 auf, der mit einer Klinke 80 zusammen wirkt, die mittels eines Lagerbolzens 82 an der dem ersten Beschlagteil 11 zugewandten Seite des dritten Beschlagteils 74 drehbar gelagert ist.

Die Klinke 80 hat eine einer L-Form ähnliche Grundgeometrie mit einem langen Schenkel und einem kurzen Schenkel. Ein kreisrundes Loch im vom kurzen Schenkel abgewandten Endbereich des langen Schenkels dient der Aufnahme des Lagerbolzens 82 und bildet gemeinsam mit diesem die Lagerstelle der Klinke 80 in einem ersten Gelenkpunkt D1 am dritten Beschlagteil 74. Im Verbindungsbereich zwischen dem langen Schenkel und dem kurzen Schenkel der Klinke 80 ist ein Verriegelungsnocken 80a zum Zusammenwirken mit einer Verriegelungsfläche 140b des Vorsprungs 140 ausgeformt. Um das dritte Beschlagteil 74 mit dem ersten Beschlagteil 11 zu verriegeln, stützt sich der Verriegelungsnocken 80a in Freischwenkrichtung an der Verriegelungsfläche 140b des Vorsprungs 140 ab.

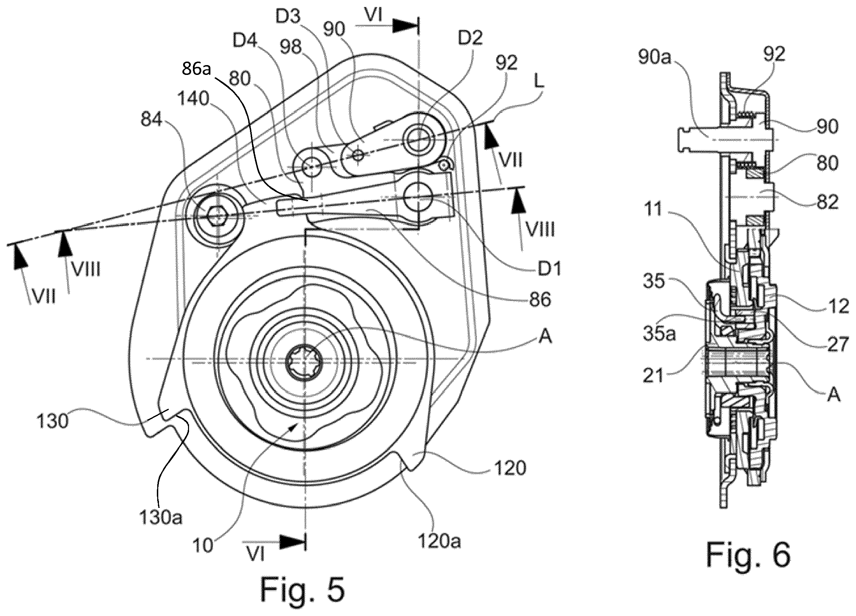

Ein als Anschlag dienender Exzenterbolzen 84 am dritten Beschlagteil 74 dient zur Begrenzung der Schwenkbewegung des dritten Beschlagteils 74 in Rückwärts-Schwenkrichtung der Lehne 2 (in Fig. 5, 9, 10, 11 und 12 gegen den Uhrzeigersinn), indem der Exzenterbolzen 84 beim Wiedererreichen der Gebrauchsstellung der Lehne 4 nach Beendigung des Freischwenkens gegen eine Abstützfläche 140a des Vorsprungs 140 anläuft. Zum Ausgleich von Fertigungstoleranzen ist der Exzenterbolzen 84 in seiner axialen Richtung gestuft mit zueinander exzentrischen, weitgehend zylinderförmigen Stufen. Ein in ein kreisrundes Loch des dritten Beschlagteils 74 eingesteckter Zylinderabschnitt des Exzenterbolzens 84 ist in radialer Richtung um eine Exzentrizität radial versetzt zu einem weiteren Zylinderabschnitt des Exzenterbolzens 84, wobei letztgenannter Zylinderabschnitt beim Wiederreichen der Gebrauchsposition in Anlage mit der Abstützfläche 140a kommt. Bei einer Drehung des Exzenterbolzens 84 um den in das dritte Beschlagteil 74 eingesteckten Zylinderabschnitt, bewegt sich der mit der Abstützfläche 140a in Anlage bringbare Zylinderabschnitt dadurch auf einer Kreisbahn, dessen Radius der Exzentrizität entspricht. Bei der Montage des Beschlags wird der Exzenterbolzen 84 gegenüber dem dritten Beschlagteil 74 soweit verdreht, bis die Nennlage des dritten Beschlagteils 74 relativ zum ersten Beschlagteil 11 eingestellt ist; anschließend wird der Exzenterbolzen 84 am dritten Beschlagteil 74 fixiert, insbesondere mit diesem verschweißt.

Zum Ausgleich von Fertigungstoleranzen kann auch der Lagerbolzen 82 entsprechend exzentrisch gestuft aufgebaut sein. Ein in ein kreisrundes Loch des dritten Beschlagteils 74 eingesteckter Zylinderabschnitt des Lagerbolzens 82 hat dann eine Mittelachse, die radial versetzt zu einer den ersten Gelenkpunkt D1 definierenden, parallelen Mittelachse eines der Lagerung der Klinke 80 dienenden Zylinderabschnitts 82 ist. Dadurch ist die Exzentrizität des Lagerbolzens 82 definiert. Bei einer Drehung des Lagerbolzens 82 um den in das dritte Beschlagteil 74 eingesteckten Zylinderabschnitt bewegt sich der erste Gelenkpunkt D1 auf einer Kreisbahn, dessen Radius der Exzentrizität entspricht. Bei der Montage des Beschlags wird der Lagerbolzen 82 gegenüber dem dritten Beschlagteil 74 soweit verdreht, bis der erste Gelenkpunkt D1 seine optimale Lage erreicht hat und die Klinke 80 mittels eines maximalen Eingriffs des Verriegelungsnockens 80a spielfrei an der Verriegelungsfläche 140b des Vorsprungs 140 in Eingriff steht, allerdings außerhalb des Winkelbereichs der Selbsthemmung; anschließend wird der Lagerbolzen am dritten Beschlagteil 74 fixiert, insbesondere mit diesem verschweißt.

Ein Sperrnocken 90 ist in einem vom ersten Gelenkpunkt D1 beabstandeten zweiten Gelenkpunkt D2 auf der dem ersten Beschlagteil 11 zugewandten Seite drehbar am dritten Beschlagteil 74 gelagert. Dazu weist der Sperrnocken 90 an einem Ende einen senkrecht vom Sperrnocken 90 abstehenden, parallel zur Achse A verlaufenden Achsstummel 90a auf, der mittels einer Buchse 94 in eine Öffnung des dritten Beschlagteils 74 eingesetzt ist. Das freie Ende des Achsstummels 90a durchragt das dritte Beschlagteil 74 und steht auf der der Klinke 80 abgewandten Seite über die im Wesentlichen plattenförmige Grundgeometrie des dritten Beschlagteils 74 über. Das freie Ende des Achsstummels 90a ist profiliert, insbesondere polygonförmig ausgebildet. Ein mit einem entsprechenden Gegenprofil ausgebildetes Bauteil kann in axialer Richtung aufgeschoben werden, so dass eine drehfeste Verbindung zwischen dem Achsstummel 90a und dem aufgeschobenen Bauteil gegeben ist. Das aufgeschobene Bauteil ist vorliegend ein in den Figuren nicht dargestellter Hebel, der über einen Seilzuges mit einem im oberen Bereich der Lehne 4 befestigten Hand-hebel 8 in Wirkverbindung steht. Eine Betätigung des Handhebels 8 dreht den Achsstummel 90a und somit den Sperrnocken um den zweiten Gelenkpunkt D2.

Eine Koppel 98 mit ebener, länglicher Grundform ist mit einem ersten Ende in einem dritten Gelenkpunkt D3 mit dem vom Achsstummel 90a abgewandten Ende des Sperrnockens 90 verbunden. Das zweite Ende der Koppel 98 ist in einem vierten Gelenkpunkt D4 mit dem kurzen Schenkel der Klinke 80 verbunden.

Der dritte Gelenkpunkt D3 ist durch einen zylindrischen Zapfen 90b gebildet, der an dem vom Achsstummel 90a abgewandten Ende des Sperrnockens 90 parallel zur Achse A absteht und in ein Langloch des ersten Endes der Koppel 98 greift. Aufgrund der Paarung des zylindrischen Zapfens 90b mit dem Langloch der Koppel 98 ist der dritte Gelenkpunkt D3 als Drehschubgelenk ausgebildet und ermöglicht so neben einer reinen Drehbewegung auch eine durch die Langlochgeometrie begrenzte Translation zwischen Koppel 98 und Sperrnocken 90.

Der vierte Gelenkpunkt D4 ist durch einen Niet 96 gebildet, der durch ein kreisrundes Loch des zweiten Endes der Koppel 98 und ein kreisrundes Loch im Endbereich des kurzen Schenkels der Klinke 80 gesteckt und derart vernietet ist, dass ein reines Drehgelenk entsteht.

Die im ersten Gelenkpunkt D1 an dem dritten Beschlagteil 74 gelagerte Klinke 80, der in dem zweiten Gelenkpunkt D2 an dem dritten Beschlagteil 74 gelagerte Sperrnocken 90 und die in dem dritten Gelenkpunkt D3 mit dem Sperrnocken 90 und in dem vierten Gelenkpunkt D4 mit der Klinke 80 gelenkig verbundene Koppel 98 definieren eine weitgehend ebene (am dritten Beschlagteil 74 angelenkte) Viergelenkkette, die dem Entriegeln und Verriegeln der Freischwenkfunktion dient.

Ein am dritten Beschlagteil 74 befestigter Deckel 78 deckt die vorgenannten Einzelteile der Freischwenkvorrichtung - wenigstens teilweise - ab und schützt diese vor Verschmutzung. Der Lagerbolzen 82, der Sperrnocken 90 und der Exzenterbolzen 84 sind zusätzlich zu deren Lagerung in den Löchern des dritten Beschlagteils 74 in einem gegenüberliegenden Lochbild im Deckel 78 abgestützt bzw. gelagert.

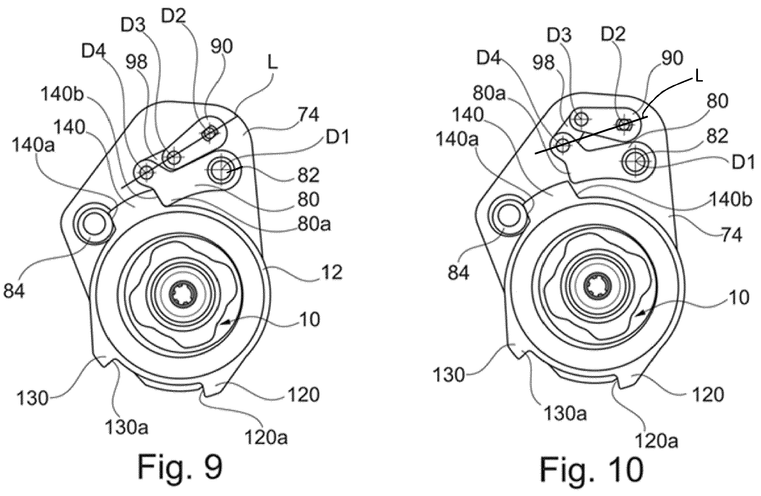

In den Figuren 9 bis 12 ist das Entriegeln und Verriegeln der Freischwenkfunktion dargestellt. Figur 9 zeigt den verriegelten Zustand der Gebrauchsposition. Die Klinke 80 ist eingefallen, d.h. der Verriegelungsnocken 80a stützt sich an der Verriegelungsfläche 140b ab. Eine zwischen Sperrnocken 90 und drittem Beschlagteil 74 wirksame Feder 92 beaufschlagt den Sperrnocken 90 mit einem Drehmoment in Richtung einer Anlage an die Klinke 80 (in Fig. 9 gegen Uhrzeigersinn). Die Klinke 80 wird dadurch unter normalen Gebrauchslasten in ihrer verriegelten Position gehalten. Der dritte Gelenkpunkt D3 liegt auf einer imaginären Verbindungslinie L zwischen dem zweiten Gelenkpunkt D2 und dem vierten Gelenkpunkt D4 oder (je nach Toleranzlage) geringfügig zwischen der Verbindungslinie L und der Klinke 80. Der Sperrnocken 90 und die Koppel 98 sind dadurch nahezu in einer Linie ausgerichtet. Der Nocken 90 stützt sich seitlich an der Klinke 80 ab, so dass sich der dritte Gelenkpunkt D3 nicht weiter in Richtung der Klinke 80 bewegen kann. Die Viergelenkkette befindet sich dadurch in einer gesperrten (Totpunkt-) Lage; auch hohe auf die Klinke 80 einwirkende Crashkräfte können die Klinke 80 aufgrund der Strecklage von Sperrnocken 90 und Koppel 98 und der Abstützung des Nockens 90 an der Klinke 80 nicht öffnen. Bei einer Ausbildung des dritten Gelenkpunktes D3 als Drehschubgelenk wird im Crashfall der kleine, begrenzte Translationsweg im Gelenk durchfahren, bis der Achsstummel 90a an einem Rand des Langloches der Koppel 98 anliegt.

Figur 10 zeigt den Beschlag 10 während des Entriegelns der Freischwenkfunktion. Durch Betätigung des Handhebels 8 wird der Sperrnocken 90 (in Figur 10 im Uhrzeigersinn) entgegen der Kraft der Feder 92 von der Klinke 80 weggeschwenkt. Der dritte Gelenkpunkt D3 wird auf die von der Klinke 80 abgewandte Seite der Verbindungslinie L bewegt. Der Sperrnocken 90 zieht mittels der Koppel 98 die Klinke 80 aus der verriegelten Position, so dass der Verriegelungsnocken 80a der Klinke 80 nicht mehr an der Verriegelungsfläche 140b anliegt und das dritte Beschlagteil 74 samt Lehne 4 in Freischwenkrichtung beweglich ist. Die Lehne 4 kann freigeschwenkt werden. Falls der dritte Gelenkpunkt D3 - wie zuvor beschrieben - im verriegelten Zustand der Freischwenkvorrichtung zwischen der Verbindungslinie L und der Klinke 80 liegt, so ermöglicht die Ausbildung des dritten Gelenkpunktes D3 als Drehschubgelenk dessen Überschreiten der Strecklage, also der Verbindungslinie L während des Entriegelungsvorgangs. In abgewandelter Ausführung ist statt des dritten Gelenkpunktes D3 einer der anderen Gelenkpunkte D1, D2, D4 als Drehschubgelenk ausgebildet. Die übrigen der Gelenkpunkte D1, D2, D3, D4 sind als reine Drehgelenke ausgebildet.

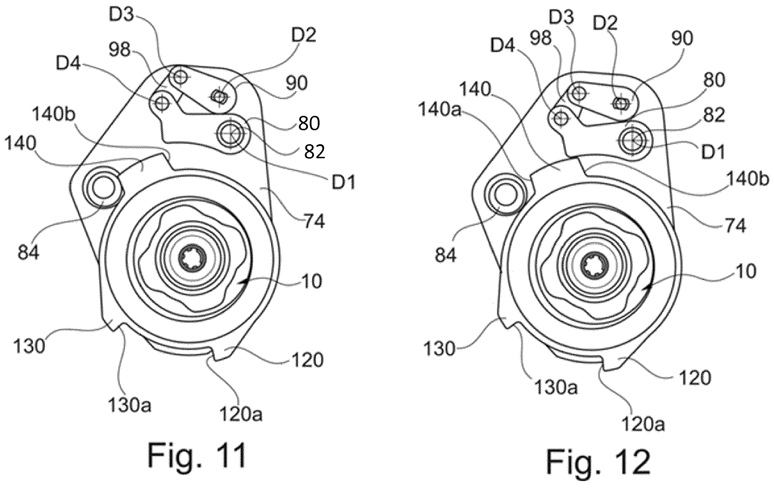

Um ein sicheres Entriegeln der Freischwenkfunktion unter allen Toleranzbedingungen zu ermöglichen, kann die Klinke 80 - wie in Figur 11 ersichtlich - noch etwas weiter in die öffnende Richtung geschwenkt werden.

Während des in Figur 12 dargestellten Freischwenkvorgangs liegt der Verriegelungsnocken 80a der Klinke 80 auf der radial äußeren Begrenzung des Vorsprungs 140 auf und gleitet auf dieser ab. Der Handhebel 8 kann somit bereits nach einem kleinen Freischwenkwinkel unbetätigt bleiben, ohne dass die Klinke 80 wieder einfallen kann.

Das Zurückschwenken und Verriegeln des dritten Beschlagteils 74 und somit der Lehne 4 erfolgt in umgekehrter Reihenfolge.

Eine in Figur 5 dargestellte, an dem Lagerbolzen 82 befestigte Rückhaltefeder 86 liegt mit einem Federarm 86a unter Vorspannung in axialer Richtung am Vorsprung 140 an. Wird das dritte Beschlagteil 74 weit nach vorne geschwenkt, so verlässt der Federarm 86a den Vorsprung 140 und federt in Richtung der Klinke 80, die dadurch an einem Einfallen hinter die Abstützfläche 140a gehindert wird.

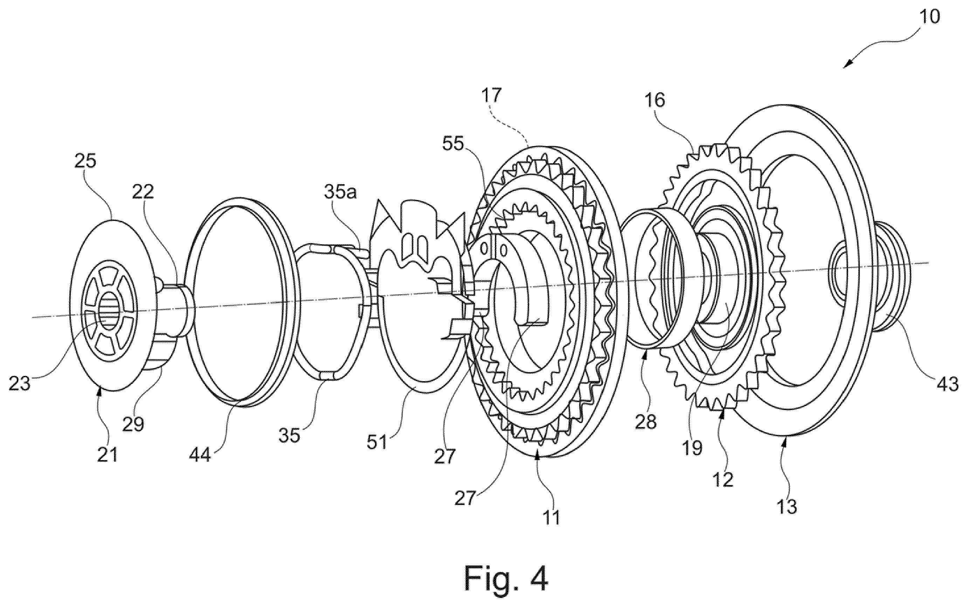

Erfindungsgemäß ist der Vorsprung 140 am ersten Beschlagteil 11 angeformt, d.h. er bildet einen einstückigen Bestandteil desselben in stofflicher Einheit und ist kein separat hergestelltes, nachträglich befestigtes Bauteil. Vorzugsweise ist auch der erste Nocken 120 und der zweite Nocken 130 am ersten Beschlagteil 11 (oder am Umklammerungsring 13 oder am Lagerring 71) angeformt. Die erfindungsgemäße Lösung wird begünstigt durch einen Umklammerungsring 13 mit einer im wesentlichen flachen Form, wie in Figur 4 und 6 dargestellt, der das erste Beschlagteil 11 allenfalls stellenweise übergreift und so auch am Rand des ersten Beschlagteils 11 radial abstehende Materialpartien ermöglicht.

Es sind verschiedene Ausführungen für den Vorsprung 140 und die Klinke 80 möglich. Die Klinke 80 kann in abgewandelter Ausführung mehrere Zähne aufweisen, die mit mehreren Zahnlücken im Vorsprung 140 zusammen wirken.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Sitzteil
- 4: Lehne
- 5: Handrad
- 7: Antriebswelle
- 8: Handhebel
- 10: Beschlag
- 11: erstes Beschlagteil
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 51: Sperrfeder
- 55: Verzahnung
- 71: Lagerring
- 74: drittes Beschlagteil
- 78: Deckel
- 80: Klinke
- 80a: Verriegelungsnocken
- 82: Lagerbolzen
- 84: Exzenterbolzen
- 86: Rückhaltefeder
- 86a: Federarm
- 90: Sperrnocken
- 90a: Achsstummel
- 90b: Zapfen
- 92: Feder
- 94: Buchse
- 96: Niet
- 98: Koppel
- 112: Adapter
- 112a: Anschlag
- 120: erster Nocken
- 120a: erste Anschlagfläche
- 130: zweiter Nocken
- 130a: zweite Anschlagfläche
- 140: Vorsprung
- 140a: Abstützfläche
- 140b: Verriegelungsfläche
- A: Achse
- D1: erster Gelenkpunkt
- D2: zweiter Gelenkpunkt
- D3: dritter Gelenkpunkt
- D4: vierter Gelenkpunkt
- L: Verbindungslinie (D2 zu D4)

## Patentansprüche

1. Beschlag (10) für einen Fahrzeugsitz, insbesondere für einen Kraftfahrzeugsitz, mit
a) einem ersten Beschlagteil (11) und einem zweiten Beschlagteil (12), welche relativ zueinander verdrehbar sind und miteinander in Getriebeverbindung stehen und
b) einem dritten Beschlagteil (74), welches relativ zum ersten Beschlagteil (11) schwenkbar an dem ersten Beschlagteil (11) gelagert ist, wobei das dritte Beschlagteil (74) mittels einer in einem ersten Gelenkpunkt (D1) an dem dritten Beschlagteil (74) gelagerten Klinke (80) mit dem ersten Beschlagteil (11) verriegelbar ist,
**dadurch gekennzeichnet, dass**
c) das dritte Beschlagteil (74), ein in einem zweiten Gelenkpunkt (D2) an dem dritten Beschlagteil (74) gelagerter Sperrnocken (90), eine in einem dritten Gelenkpunkt (D3) mit dem Sperrnocken (90) und in einem vierten Gelenkpunkt (D4) mit der Klinke (80) gelenkig verbundene Koppel (98) und die Klinke (80) eine Viergelenkkette (74, 80, 98, 90) definieren.

2. Beschlag (10) nach Anspruch 1, **dadurch gekennzeichnet, dass** mindestens einer der Gelenkpunkte (D1, D2, D3, D4) der Viergelenkkette (74, 80, 98, 90) als Drehschubgelenk ausgebildet ist und die übrigen Gelenkpunkte (D1, D2, D3, D4) als Drehgelenke ausgebildet sind.

3. Beschlag (10) nach Anspruch 2, **dadurch gekennzeichnet, dass** der zweite Gelenkpunkt (D2) als Drehschubgelenk ausgebildet ist und die übrigen Gelenkpunkte (D1, D3, D4) als Drehgelenke ausgebildet sind.

4. Beschlag (10) nach einem der vorhergehenden Ansprüche, **dadurch gekennzeichnet, dass** eine Feder (92) die Viergelenkkette (74, 80, 98, 90) in Richtung der verriegelten Position der Klinke (80) vorspannt.

5. Beschlag (10) nach Anspruch 4, **dadurch gekennzeichnet, dass** die Feder (92) den Sperrnocken (90) in Richtung der verriegelten Position der Klinke (80) vorspannt.

6. Beschlag (10) nach Anspruch 4 oder 5, **dadurch gekennzeichnet, dass** die Feder (92) den Sperrnocken (90) in Anlage an die Klinke (80) schwenkt.

7. Beschlag (10) nach einem der Ansprüche 4 bis 6, **dadurch gekennzeichnet, dass** der Sperrnocken (90) zum Entriegeln der Klinke (80) entgegen der Kraft der Feder (92) geschwenkt wird und dabei die Viergelenkkette (74, 80, 98, 90) in Richtung der entriegelten Position der Klinke (80) bewegt wird.

8. Beschlag (10) nach einem der vorhergehenden Ansprüche, **dadurch gekennzeichnet, dass** im verriegelten Zustand der Klinke (80) der dritte Gelenkpunkt (D3) auf einer imaginären Verbindungslinie (L) zwischen dem zweiten Gelenkpunkt (D2) und dem vierten Gelenkpunkt (D4) liegt.

9. Beschlag (10) nach einem der Ansprüche 1 bis 7, **dadurch gekennzeichnet, dass** im verriegelten Zustand der Klinke (80) der dritte Gelenkpunkt (D3) zwischen der Verbindungslinie (L) und der Klinke (80) liegt.

10. Beschlag (10) nach Anspruch 8 oder 9, **dadurch gekennzeichnet, dass** während des Entriegelungsvorgangs der Klinke (80) der dritte Gelenkpunkt (D3) der Viergelenkkette (74, 80, 98, 90) auf die von der Klinke (80) abgewandte Seite der Verbindungslinie (L) bewegt wird.

11. Beschlag (10) nach einem der vorhergehenden Ansprüche, **dadurch gekennzeichnet, dass** der Sperrnocken (90) einen Achsstummel (90a) umfasst, der unter Bildung des zweiten Gelenkpunkts (D2) in einer Öffnung des dritten Beschlagteils (74) drehbar gelagert ist.

12. Beschlag (10) nach Anspruch 11, **dadurch gekennzeichnet, dass** der Achsstummel (90a) eine Schnittstelle zur wenigstens mittelbaren Verbindung mit einem Handhebel (8) aufweist.

13. Beschlag (10) nach Anspruch 12, **dadurch gekennzeichnet, dass** die Schnittstelle des Achsstummels eine Polygonform aufweist.

14. Beschlag (10) nach einem der vorhergehenden Ansprüche, **dadurch gekennzeichnet, dass** die Klinke (80) genau einen Zahn in Form eines Verriegelungsnockens (80a) zum Zusammenwirken mit einem Vorsprung (140) des ersten Beschlagteils (11) aufweist.

15. Fahrzeugsitz, insbesondere Kraftfahrzeugsitz, mit wenigstens einem Beschlag (10) nach einem der vorhergehenden Ansprüche, mit einem Sitzteil (3), welches mit dem zweiten Beschlagteil (12) verbunden ist, und mit einer Lehne (4), welche mit dem dritten Beschlagteil (74) verbunden ist.

## Claims

1. A fitting (10) for a vehicle seat, in particular for a passenger vehicle seat, said fitting having
a) a first fitting part (11) and a second fitting part (12) which are rotatable relative to one another and are in geared connection with one another and
b) a third fitting part (74) which is mounted on the first fitting part (11) so as to be pivotable relative to the first fitting part (11), wherein the third fitting part (74) is lockable to the first fitting part (11) by means of a pawl (80) mounted in a first hinge point (D1) on the third fitting part (74),
**characterized in that**
c) the third fitting part (74), a locking cam (90) which is mounted in a second hinge point (D2) on the third fitting part (74), a coupler (98) which is pivotably connected to the locking cam (90) in a third hinge point (D3) and to the pawl (80) in a fourth hinge point (D4) and the pawl (80) define a four-bar chain (74, 80, 98, 90).

2. The fitting (10) as claimed in claim 1, **characterized in that** at least one of the hinge points (D1, D2, D3, D4) of the four-bar chain (74, 80, 98, 90) is realized as a turning and sliding joint and the remaining hinge points (D1, D2, D3, D4) are realized as turning joints.

3. The fitting (10) as claimed in claim 2, **characterized in that** the second hinge point (D2) is realized as a turning and sliding joint and the remaining hinge points (D1, D3, D4) are realized as turning joints.

4. The fitting (10) as claimed in one of the preceding claims, **characterized in that** a spring (92) prestresses the four-bar chain (74, 80, 98, 90) in the direction of the locked position of the pawl (80).

5. The fitting (10) as claimed in claim 4, **characterized in that** the spring (92) prestresses the locking cam (90) in the direction of the locked position of the pawl (80).

6. The fitting (10) as claimed in claim 4 or 5, **characterized in that** the spring (92) pivots the locking cam (90) in abutment against the pawl (80).

7. The fitting (10) as claimed in one of claims 4 to 6, **characterized in that** the locking cam (90) is pivoted against the force of the spring (92) for unlocking the pawl (80) and at the same time the four-bar chain (74, 80, 98, 90) is moved in the direction of the unlocked position of the pawl (80).

8. The fitting (10) as claimed in one of the preceding claims, **characterized in that** in the locked state of the pawl (80) the third hinge point (D3) lies on an imaginary connecting line (L) between the second hinge point (D2) and the fourth hinge point (D4).

9. The fitting (10) as claimed in one of claims 1 to 7, **characterized in that** in the locked state of the pawl (80) the third hinge point (D3) lies between the connecting line (L) and the pawl (80).

10. The fitting (10) as claimed in claim 8 or 9, **characterized in that** during the unlocking operation of the pawl (80) the third hinge point (D3) of the four-bar chain (74, 80, 98, 90) is moved to the side of the connecting line (L) remote from the pawl (80).

11. The fitting (10) as claimed in one of the preceding claims, **characterized in that** the locking cam (90) includes a bearing journal (90a) which is rotatably mounted in an opening of the third fitting part (74) thereby forming the second hinge point (D2).

12. The fitting (10) as claimed in claim 11, **characterized in that** the bearing journal (90a) comprises an interface to the at least indirect connection to a hand lever (8).

13. The fitting (10) as claimed in claim 12, **characterized in that** the interface of the bearing journal comprises a polygonal form.

14. The fitting (10) as claimed in one of the preceding claims, **characterized in that** the pawl (80) comprises precisely one tooth in the form of a locking cam (80a) for interacting with a projection (140) of the first fitting part (11).

15. A vehicle seat, in particular a passenger vehicle seat, having at least one fitting (10) as claimed in one of the preceding claims, said vehicle seat having a seat part (3) which is connected to the second fitting part (12), and having a back rest (4) which is connected to the third fitting part (74).

## Revendications

1. Ferrure (10) pour un siège de véhicule, en particulier pour un siège de véhicule automobile, comprenant
a) une première partie de ferrure (11) et une deuxième partie de ferrure (12), qui peuvent tourner l'une par rapport à l'autre et qui sont en liaison de transmission l'une avec l'autre et
b) une troisième partie de ferrure (74) qui est supportée sur la première partie de ferrure (11) de manière à pouvoir pivoter par rapport à la première partie de ferrure (11), la troisième partie de ferrure (74) pouvant être verrouillée à la première partie de ferrure (11) au moyen d'un cliquet (80) supporté dans un premier point d'articulation (D1) sur la troisième partie de ferrure (74),
**caractérisée en ce que**
c) la troisième partie de ferrure (74), une came de blocage (90) supportée dans un deuxième point d'articulation (D2) sur la troisième partie de ferrure (74), une bielle (98) connectée de manière articulée dans un troisième point d'articulation (D3) à la came de blocage (90) et dans un quatrième point d'articulation (D4) au cliquet (80) et le cliquet (80) définissent une chaîne à quadrilatère articulé (74, 80, 98, 90).

2. Ferrure (10) selon la revendication 1, **caractérisée en ce qu'**au moins l'un des points d'articulation (D1, D2, D3, D4) de la chaîne à quadrilatère articulé (74, 80, 98, 90) est réalisé sous forme d'articulation à tiroir rotatif et les autres points d'articulation (D1, D2, D3, D4) sont réalisés sous forme d'articulations rotatives.

3. Ferrure (10) selon la revendication 2, **caractérisée en ce que** le deuxième point d'articulation (D2) est réalisé sous forme d'articulation à tiroir rotatif et les autres points d'articulation (D1, D3, D4) sont réalisés sous forme d'articulations rotatives.

4. Ferrure (10) selon l'une quelconque des revendications précédentes, **caractérisée en ce qu'**un ressort (92) précontraint la chaîne à quadrilatère articulé (74, 80, 98, 90) dans la direction de la position verrouillée du cliquet (80).

5. Ferrure (10) selon la revendication 4, **caractérisée en ce que** le ressort (92) précontraint la came de blocage (90) dans la direction de la position verrouillée du cliquet (80).

6. Ferrure (10) selon la revendication 4 ou 5, **caractérisée en ce que** le ressort (92) pivote la came de blocage (90) en appui contre le cliquet (80).

7. Ferrure (10) selon l'une quelconque des revendications 4 à 6, **caractérisée en ce que** la came de blocage (90) est pivotée pour déverrouiller le cliquet (80) à l'encontre de la force du ressort (92) et la chaîne à quadrilatère articulé (74, 80, 98, 90) est en l'occurrence déplacée dans la direction de la position déverrouillée du cliquet (80).

8. Ferrure (10) selon l'une quelconque des revendications précédentes, **caractérisée en ce que** dans l'état verrouillé du cliquet (80), le troisième point d'articulation (D3) se situe sur une ligne de connexion imaginaire (L) entre le deuxième point d'articulation (D2) et le quatrième point d'articulation (D4).

9. Ferrure (10) selon l'une quelconque des revendications 1 à 7, **caractérisée en ce que** dans l'état verrouillé du cliquet (80), le troisième point d'articulation (D3) est situé entre la ligne de connexion (L) et le cliquet (80).

10. Ferrure (10) selon la revendication 8 ou 9, **caractérisée en ce que** pendant l'opération de déverrouillage du cliquet (80), le troisième point d'articulation (D3) de la chaîne à quadrilatère articulé (74, 80, 98, 90) est déplacé sur le côté de la ligne de connexion (L) opposé au cliquet (80).

11. Ferrure (10) selon l'une quelconque des revendications précédentes, **caractérisée en ce que** la came de blocage (90) comprend un bout d'axe (90a) qui est supporté à rotation dans une ouverture de la troisième partie de ferrure (74) en formant le deuxième point d'articulation (D2).

12. Ferrure (10) selon la revendication 11, **caractérisée en ce que** le bout d'axe (90a) présente une interface en vue de la connexion au moins indirecte avec un levier manuel (8).

13. Ferrure (10) selon la revendication 12, **caractérisée en ce que** l'interface du bout d'axe présente une forme polygonale.

14. Ferrure (10) selon l'une quelconque des revendications précédentes, **caractérisée en ce que** le cliquet (80) présente exactement une dent sous la forme d'une came de verrouillage (80a) en vue de la connexion à une saillie (140) de la première partie de ferrure (11).

15. Siège de véhicule, en particulier siège de véhicule automobile, comprenant au moins une ferrure (10) selon l'une quelconque des revendications précédentes, comprenant une partie de siège (3) qui est connectée à la deuxième partie de ferrure (12) et comprenant un dossier (4) qui est connecté à la troisième partie de ferrure (74).
